# EUROPÄISCHE PATENTSCHRIFT

(11) **EP 1 448 642 B1**
(45) Veröffentlichungstag und Bekanntmachung des Hinweises auf die Patenterteilung: **11.10.2006**
(21) Anmeldenummer: 02787629.1
(22) Anmeldetag: 11.11.2002
(51) Int. Cl.: C08F 283/06, C11D 3/37

(54) **PFROPFPOLYMERISATE MIT CYCLISCHE N-VINYLAMIDE ENTHALTENDEN SEITENKETTEN**
GRAFT POLYMER COMPRISING SIDECHAINS CONTAINING CYCLIC N-VINYLAMIDES
POLYMERES GREFFES PRESENTANT DES CHAINES LATERALES QUI CONTIENNENT DES N-VINYLAMIDES CYCLIQUES

(30) Priorität: 16.11.2001 DE 10156134
(43) Veröffentlichungstag der Anmeldung: 25.08.2004
(73) Patentinhaber: BASF Aktiengesellschaft, 67056 Ludwigshafen (DE)
(72) Erfinder: BAUM, Pia, 69469 Weinheim (DE); MÜLLER, Christine, 67063 Ludwigshafen (DE); OSWALD, Anke, 67459 Böhl-Iggelheim (DE); POTTHOFF-KARL, Birgit, 67061 Ludwigshafen (DE)
(86) Internationale Anmeldenummer: PCT/EP2002/012554
(87) Internationale Veröffentlichungsnummer: WO 2003/042263

(56) Entgegenhaltungen:
- EP-A- 0 039 756
- DE-A- 10 036 713
- US-A- 4 032 599
- US-A- 4 048 301
- US-A- 4 091 030
- US-A- 4 904 408

## Beschreibung

Die Erfindung betrifft Pfropfpolymerisate aus
(A) einer polymeren Pfropfgrundlage, die keine monoethylenisch ungesättigten Einheiten aufweist, und
(B) durch Polymerisation eines cyclischen N-Vinylamids der allgemeinen Formel I 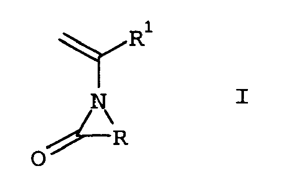 in der R C₁-C₅-Alkyl und R¹ Wasserstoff oder C₁-C₄-Alkyl bedeuten, gebildeten polymeren Seitenketten,
wobei der Anteil der Seitenketten (B) am Gesamtpolymerisat ≥ 60 Gew.-% beträgt.

Außerdem betrifft die Erfindung die Herstellung dieser Pfropfpolymerisate und ihre Verwendung als Farbübertragungsinhibitoren in Waschmitteln.

Während des Waschprozesses werden von gefärbten Textilien oftmals Farbstoffmoleküle abgelöst, die dann auf andere Textilien aufziehen. Um dieser unerwünschten Farbübertragung entgegenzuwirken, werden sogenannte Farbübertragungsinhibitoren eingesetzt.

In der CA-A-2 227 484 werden Block- oder statistische Copolymere von ungesättigten anionischen oder nichtionischen Monomeren, Vinylimidazol und N-Vinylpyrrolidon als Bestandteil von Waschmittelzusammensetzungen mit farbstoffübertragungsinhibierender Wirkung beschrieben.

In der DE-A-100 36 713 werden Farbstoffübertragungsinhibitoren auf Basis von Pfropfpolymeren mit Polyethylenglykol als Pfropfgrundlage und N-Vinylpyrrolidon als Pfropfkomponente beansprucht, bei denen das Gewichtsverhältnis von Pfropfkomponente zu Pfropfgrundlage 0,1 bis 1,2 : 1 betragen soll. Explizit offenbart wird jedoch nur ein Pfropfpolymerisat, bei dem der Vinylpyrrolidonanteil 25 Gew.-% beträgt.

Schließlich sind in der SU-A-331 361 Copolymerisate von Polyethylenglykolen und Vinylpyrrolidon mit einem Vinylpyrrolidonanteil von 32 bzw. 55 Gew.-% beschrieben, die als Sensibilisatoren für fotografische Materialien eingesetzt werden.

Die bekannten Farbübertragungsinhibitoren weisen eine Reihe von Nachteilen auf. Zum einen ist ihre Wirksamkeit oft nicht hoch genug und hängt zudem stark von der Zusammensetzung des Waschmittels ab, zum anderen sind sie nicht mit allen üblichen Waschmittelkomponenten verträglich, so daß sich starke Einschränkungen bei der Waschmittelzusammensetzung ergeben, was insbesondere bei Flüssigwaschmitteln problematisch ist.

Der Erfindung lag daher die Aufgabe zugrunde, diesen Mängeln abzuhelfen und Farbübertragungsinhibitoren mit vorteilhaften Anwendungseigenschaften bereitzustellen.

Demgemäß wurden Pfropfpolymerisate aus
(A) einer polymeren Pfropfgrundlage, die keine monoethylenisch ungesättigten Einheiten aufweist,
(B) und durch Polymerisation eines cyclischen N-Vinylamids der allgemeinen Formel I 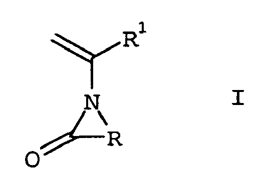 in der R C₁-C₅-Alkyl und R¹ Wasserstoff oder C₁-C₄-Alkyl bedeuten, gebildeten polymeren Seitenketten,
wobei der Anteil der Seitenketten (B) am Gesamtpolymerisat ≥ 60 Gew.-% beträgt, gefunden.

Bevorzugte Pfropfpolymerisate sind den Unteransprüchen zu entnehmen.

Außerdem wurde ein Verfahren zur Herstellung der Pfropfpolymerisate gefunden, welches dadurch gekennzeichnet ist, daß man die cyclischen Vinylamide der Formel I in Gegenwart der Pfropfgrundlage (A) radikalisch polymerisiert.

Schließlich wurde die Verwendung der Pfropfpolymerisate als Farbübertragungsinhibitoren in Waschmitteln gefunden.

Für die erfindungsgemäßen kammartig aufgebauten Pfropfpolymerisate ist ein optimales Verhältnis von Seitenketten (B) zu Rückgrat (Pfropfgrundlage (A)) wesentlich. Dieses liegt vor, wenn der Anteil der Seitenketten (B) an den Pfropfpolymerisaten ≥ 60 ist. Erst dann ist die Seitenkettendichte und -länge groß genug. Bevorzugt beträgt der Anteil 70 bis 95 Gew.-% und besonders bevorzugt 70 bis 90 Gew.-%.

Im einzelnen seien als die Seitenketten (B) bildende cyclische Vinylamide I beispielsweise N-Vinylpyrrolidon, N-Vinylvalerolactam und N-Vinylcaprolactam genannt, wobei N-Vinylpyrrolidon bevorzugt ist.

Die polymere Pfropfgrundlage (A) der erfindungsgemäßen Pfropfpolymerisate bildet bevorzugt ein Polyether. Der Begriff "polymer" soll dabei auch oligomere Verbindungen mitumfassen.

Vorzugsweise haben die Polyether (A) ein mittleres Molekulargewicht Mₙ von mindestens 300 und weisen die allgemeine Formel IIa 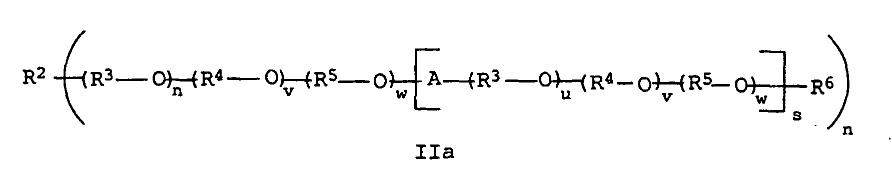 oder IIb 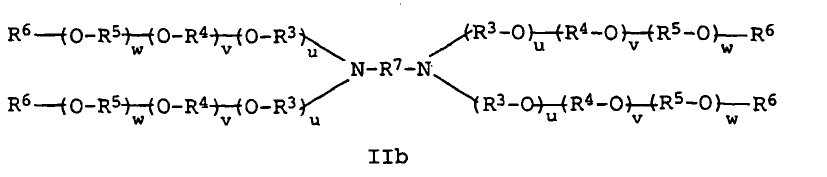 auf, in denen die Variablen folgende Bedeutung haben:
- R²: Hydroxy, Amino, C₁-C₂₄-Alkoxy, R⁸-COO-, R⁸-NH-COO-, Polyalkoholrest;
- R³ bis R⁵: gleich oder verschieden und jeweils -(CH₂)₂-, -(CH₂)₃-, -(CH₂)₄-, -CH₂-CH(CH₃)-, -CH₂-CH(CH₂-CH₃)-, -CH₂-CHOR⁹-CH₂-;
- R⁶: Wasserstoff, Amino-C₁-C₆-alkyl, C₁-C₂₄-Alkyl, R⁸-CO-, R⁸-NH-CO-;
- R⁷: C₁-C₂₀-Alkylen, dessen Kohlenstoffkette durch 1 bis 10 Sauerstoffatome in Etherfunktion unterbrochen sein kann;
- R⁸: C₁-C₂₄-Alkyl;
- R⁹: Wasserstoff, C₁-C₂₄-Alkyl, R⁸-CO-;
- A: -CO-O-, -CO-B-CO-O-, -CO-NH-B-NH-CO-O-;
- B: -(CH₂)ₜ-, gewünschtenfalls substituiertes Arylen;
- n: 1 oder, wenn R² einen Polyalkoholrest bedeutet, 1 bis 8;
- s: 0 bis 500;
- t: 1 bis 12;
- u: gleich oder verschieden und jeweils 1 bis 5000;
- v: gleich oder verschieden und jeweils 0 bis 5000;
- w: gleich oder verschieden und jeweils 0 bis 5000.

Bevorzugte Pfropfgrundlage (A) sind die Polyether der Formel IIa.

Bei der Pfropfgrundlage (A) handelt es sich um Polyether aus der Gruppe der Polyalkylenoxide auf Basis von Ethylenoxid, Propylenoxid und Butylenoxiden, Polytetrahydrofuran sowie Polyglycerin. Je nach Art der Monomerbausteine ergeben sich Polymerisate mit folgenden Struktureinheiten:

-(CH₂)₂-O-, - (CH₂)₃-O-, -(CH₂)₄-O-, -CH₂-CH(CH₃)-O-,

-CH₂-CH(CH₂-CH₃)-O-, -CH₂-CHOR⁸-CH₂-O-

Geeignet sind sowohl Homopolymerisate als auch Copolymerisate, wobei die Copolymerisate statistisch verteilt sein oder als Blockpolymerisate vorliegen können.

Die endständigen primären Hydroxylgruppen der auf Basis von Alkylenoxiden oder Glycerin hergestellten Polyether sowie die sekundären OH-Gruppen von Polyglycerin können sowohl frei vorliegen als auch mit C₁-C₂₄-Alkoholen verethert, mit C₁-C₂₄-Carbonsäuren verestert oder mit Isocyanaten zu Urethanen umgesetzt sein. Für diesen Zweck geeignete Alkohole sind z.B.: primäre aliphatische Alkohole, wie Methanol, Ethanol, Propanol und Butanol, primäre aromatische Alkohole, wie Phenol, Isopropylphenol, tert.-Butylphenol, Octylphenol, Nonylphenol und Naphthol, sekundäre aliphatische Alkohole, wie Isopropanol, tertiäre aliphatische Alkohole, wie tert.-Butanol, und mehrwertige Alkohole, z.B. Diole, wie Ethylenglykol, Diethylenglykol, Propylenglykol, 1,3-Propandiol und Butandiol, und Triole, wie Glycerin und Trimethylolpropan. Die Hydroxylgruppen können jedoch auch durch reduktive Aminierung mit Wasserstoff-Ammoniak-Gemischen unter Druck gegen primäre Aminogruppen ausgetauscht oder durch Cyanethylierung mit Acrylnitril und Hydrierung in Aminopropylenendgruppen umgewandelt sein. Die Verschließung der Hydroxylendgruppen kann dabei nicht nur nachträglich durch Umsetzung mit den Alkoholen oder mit Alkalimetallaugen, Aminen und Hydroxylaminen erfolgen, sondern diese Verbindungen können wie Lewis-Säuren, z.B. Bortrifluorid, auch zu Beginn der Polymerisation als Starter eingesetzt werden. Schließlich können die Hydroxylgruppen auch durch Umsetzung mit Alkylierungsmitteln, wie Dimethylsulfat, verschlossen werden.

Die Alkylreste in Formel IIa und IIb können verzweigte oder unverzweigte C₁-C₂₄-Alkylreste sein, wobei C₁-C₁₂-Alkylreste bevorzugt und C₁-C₆-Alkylreste besonders bevorzugt sind. Als Beispiele seien Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 2,2-Dimethylpropyl, 1-Ethylpropyl, n-Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, n-Heptyl, 2-Ethylhexyl, n-Octyl, n-Nonyl, n-Decyl, n-Undecyl, n-Dodecyl, n-Tridecyl, n-Tetradecyl, n-Pentadecyl, n-Hexadecyl, n-Heptadecyl, n-Octadecyl, n-Nonadecyl und n-Eicosyl genannt.

Das mittlere Molekulargewicht Mₙ der Polyether (A) beträgt mindestens 300 und ist in der Regel ≤ 100 000. Es beträgt bevorzugt 500 bis 50 000, besonders bevorzugt 500 bis 10 000 und ganz besonders bevorzugt 500 bis 2 000.

Vorteilhafterweise verwendet man Homo- und Copolymerisate von Ethylenoxid, Propylenoxid, Butylenoxid und Isobutylenoxid, die linear oder verzweigt sein können, als Pfropfgrundlage (A). Der Begriff Homopolymerisate soll dabei erfindungsgemäß auch solche Polymerisate umfassen, die außer der polymerisierten Alkylenoxideinheit noch die reaktiven Moleküle enthalten, die zur Initiierung der Polymerisation der cyclischen Ether bzw. zur Endgruppenverschließung des Polymerisats eingesetzt wurden.

Verzweigte Polymerisate können hergestellt werden, indem man beispielsweise an niedrigmolekulare Polyalkohole (Reste R² in Formel IIa und IIb), z.B. Pentaerythrit, Glycerin und Zucker bzw. Zukkeralkohole, wie Saccharose, D-Sorbit und D-Mannit, Disaccharide, Ethylenoxid und gewünschtenfalls Propylenoxid und/oder Butylenoxide oder auch Polyglycerin anlagert.

Dabei können Polymerisate gebildet werden, bei denen mindestens eine, bevorzugt eine bis acht, besonders bevorzugt eine bis fünf der in dem Polyalkoholmolekül vorhandenen Hydroxylgruppen in Form einer Etherbindung mit dem Polyetherrest gemäß Formel IIa bzw. IIb verknüpft sein können.

Vierarmige Polymerisate können erhalten werden, indem man die Alkylenoxide an Diamine, vorzugsweise Ethylendiamin, anlagert.

Weitere verzweigte Polymerisate können hergestellt werden, indem man Alkylenoxide mit höherwertigen Aminen, z.B. Triaminen, oder insbesondere Polyethyleniminen umsetzt. Hierfür geeignete Polyethylenimine haben in der Regel mittlere Molekulargewichte Mₙ von 300 bis 20 000, bevorzugt 500 bis 10 000 und besonders bevorzugt 500 bis 5 000. Das Gewichtsverhältnis von Alkylenoxid zu Polyethylenimin beträgt üblicherweise 100:1 bis 0,1:1, vorzugsweise 20:1 bis 0,5:1.

Es ist aber auch möglich, Polyester von Polyalkylenoxiden und aliphatischen C₁-C₁₂-, bevorzugt C₁-C₆-Dicarbonsäuren oder aromatischen Dicarbonsäuren, z.B. Oxalsäure, Bernsteinsäure, Adipinsäure oder Terephthalsäure, mit mittleren Molekulargewichten von 1 500 bis 25 000 als Pfropfgrundlage (A) zu verwenden.

Es ist weiterhin möglich, durch Phosgenierung hergestellte Polycarbonate von Polyalkylenoxiden oder auch Polyurethane von Polyalkylenoxiden und aliphatischen C₁-C₁₂-, bevorzugt C₁-C₆-Diisocyanaten oder aromatischen Diisocyanaten, z.B. Hexamethylendiisocyanat oder Phenylendiisocyanat, als Pfropfgrundlage (A) zu verwenden.

Diese Polyester, Polycarbonate oder Polyurethane können bis zu 500, bevorzugt bis zu 100 Polyalkylenoxideinheiten enthalten, wobei die Polyalkylenoxideinheiten sowohl aus Homopolymerisaten als auch aus Copolymerisaten unterschiedlicher Alkylenoxide bestehen können.

Besonders bevorzugt werden Homo- und Copolymerisate von Ethylenoxid und/oder Propylenoxid als Pfropfgrundlage (A) eingesetzt, die einseitig oder beidseitig endgruppenverschlossen sein können.

Der besondere Vorteil von Polypropylenoxid und copolymeren Alkylenoxiden mit hohem Propylenoxidanteil liegt darin, daß die Pfropfung leicht erfolgt.

Der besondere Vorteil von Polyethylenoxid und copolymeren Alkylenoxiden mit hohem Ethylenoxidanteil besteht darin, daß bei erfolgter Pfropfung und gleicher Pfropfdichte wie bei Polypropylenoxid das Gewichtsverhältnis von Seitenkette zu Pfropfgrundlage größer ist.

Die K-Werte der erfindungsgemäßen Pfropfpolymerisate betragen üblicherweise 10 bis 150, bevorzugt 10 bis 80 und besonders bevorzugt 15 bis 60 (bestimmt nach H. Fikentscher, Cellulose-Chemie, Bd. 13, S. 58 bis 64 und 71 bis 74 (1932) in Wasser bei 25°C und Polymerkonzentrationen, die je nach K-Wert-Bereich bei 0,1 Gew.-% bis 5 Gew.-% liegen). Der jeweils gewünschte K-Wert läßt sich in an sich bekannter Weise durch die Zusammensetzung der Einsatzstoffe einstellen.

Bei dem ebenfalls erfindungsgemäßen Verfahren zur Herstellung der Pfropfpolymerisate werden die Vinylamide I in Gegenwart der Pfropfgrundlage (A) radikalisch polymerisiert.

Die Polymerisation kann beispielsweise im Sinne einer Lösungspolymerisation, Polymerisation in Substanz, Emulsionspolymerisation, umgekehrten Emulsionspolymerisation, Suspensionspolymerisation, umgekehrten Suspensionspolymerisation oder Fällungspolymerisation geführt werden. Bevorzugt sind die Polymerisation in Substanz und vor allem die Lösungspolymerisation, die insbesondere in Gegenwart von Wasser durchgeführt wird.

Bei der Polymerisation in Substanz kann man so vorgehen, daß man die Vinylamide I in der Pfropfgrundlage (A) löst, die Mischung auf die Polymerisationstemperatur erhitzt und nach Zugabe eines Radikalstarters auspolymerisiert. Die Polymerisation kann auch halbkontinuierlich durchgeführt werden, indem man zunächst einen Teil. z.B. 10 Gew.-% der Mischung aus Pfropfgrundlage (A) Vinylamid I und Radikalstarter vorlegt und auf Polymerisationstemperatur erhitzt und nach dem Anspringen der Polymerisation den Rest der zu polymerisierenden Mischung nach Fortschritt der Polymerisation zugibt. Man kann jedoch auch die Pfropfgrundlage (A) in einem Reaktor vorlegen und auf Polymerisationstemperatur erhitzen und Vinylamid I und den Radikalstarter entweder auf einmal, absatzweise oder vorzugsweise kontinuierlich zufügen und polymerisieren.

Selbstverständlich kann die oben beschriebene Pfropfpolymerisation auch in einem Lösungsmittel durchgeführt werden. Geeignete organische Lösungsmittel sind beispielsweise aliphatische und cycloaliphatische einwertige Alkohole, wie Methanol, Ethanol, n-Propanol, Isopropanol, n-Butanol, sek.-Butanol, tert.-Butanol, n-Hexanol und Cyclohexanol, mehrwertige Alkohole, z.B. Glykole, wie Ethylenglykol, Propylenglykol und Butylenglykol, und Glycerin, Alkylether mehrwertiger Alkohole, z.B. Methyl- und Ethylether der genannten zweiwertigen Alkohole, sowie Etheralkohole, wie Diethylenglykol und Triethylenglykol, sowie cyclische Ether, wie Dioxan.

Bevorzugt wird die Pfropfpolymerisation erfindungsgemäß in Wasser als Lösungsmittel durchgeführt. Hierbei sind die Pfropfgrundlage (A) und Vinylamid I in Abhängigkeit von der verwendeten Wassermenge mehr oder weniger gut gelöst. Das Wasser kann - teilweise oder ganz - auch im Laufe der Polymerisation zugegeben werden. Selbstverständlich können auch Mischungen von Wasser und den oben genannten organischen Lösungsmitteln zum Einsatz kommen.

Üblicherweise verwendet man 5 bis 250 Gew.-%, vorzugsweise 10 bis 150 Gew.-%, organisches Lösungsmittel, Wasser oder Gemisch aus Wasser und organischem Lösungsmittel, bezogen auf das Pfropfpolymerisat.

Bei der Polymerisation in Wasser werden in der Regel 10 bis 70 gew.-%ige, bevorzugt 20 bis 50 gew.-%ige Lösungen bzw. Dispersionen der erfindungsgemäßen Pfropfpolymerisate erhalten, die gewünschtenfalls mit Hilfe verschiedener Trocknungsverfahren, z.B. Sprühtrocknung, Fluidized Spray Drying, Walzentrocknung oder Gefriertrocknung, in Pulverform überführt werden können. Durch Eintragen in Wasser kann dann zum gewünschten Zeitpunkt leicht wieder eine wässrige Lösung bzw. Dispersion hergestellt werden.

Als Radikalstarter eignen sich vor allem Peroxoverbindungen, Azoverbindungen, Redoxinitiatorsysteme und reduzierende Verbindungen. Selbstverständlich kann man auch Mischungen von Radikalstartern verwenden.

Beispiele für geeignete Radikalstarter sind im einzelnen: Alkalimetallperoxodisulfate, z.B. Natriumperoxodisulfat, Ammoniumperoxodisulfat, Wasserstoffperoxid, organische Peroxide, wie Diacetylperoxid, Di-tert.-butylperoxid, Diamylperoxid, Dioctanoylperoxid, Didecanoylperoxid, Dilauroylperoxid, Dibenzoylperoxid, Bis-(o-toloyl)peroxid, Succinylperoxid, tert.-Butylperacetat, tert.-Butylpermaleinat, tert.-Butylperisobutyrat, tert.-Butylperpivalat, tert.-Butylperoctoat, tert.-Butylperneodecanoat, tert.-Butylperbenzoat, tert.-Butylperoxid, tert.-Butylhydroperoxid, Cumolhydroperoxid, tert.-Butylperoxi-2-ethylhexanoat und Diisopropylperoxidicarbamat; Azobisisobutyronitril, Azobis(2-amidopropan)dihydrochlorid und 2,2'-Azobis(2-methylbutyronitril); Natriumsulfit, Natriumbisulfit, Natriumformaldehydsulfoxilat und Hydrazin und Kombinationen dieser Verbindungen mit Wasserstoffperoxid; Ascorbinsäure/Eisen(II)sulfat/Natriumperoxodisulfat, tert.-Butylhydroperoxid/Natriumdisulfit und tert.-Butylhydroperoxid/Natriumhydroxymethansulfinat.

Bevorzugte Radikalstarter sind z.B. tert.-Butylperpivalat, tert.-Butylperoctoat, tert.-Butylperneodecanoat, tert.-Butylperoxid, tert.-Butylhydroperoxid, Azobis(2-methylpropionamidin)dihydrochlorid, 2,2'-Azobis(2-methylbutyronitril), Wasserstoffperoxid und Natriumperoxodisulfat, denen Redoxmetallsalze, z.B. Eisensalze, in geringen Mengen zugesetzt werden können.

Üblicherweise werden, bezogen auf das Vinylamid I, 0,01 bis 10 Gew.-%, vorzugsweise 0,1 bis 5 Gew.-%, Radikalstarter eingesetzt.

Gewünschtenfalls können auch Polymerisationsregler zum Einsatz kommen. Geeignet sind die dem Fachmann bekannten Verbindungen, z.B. Schwefelverbindungen, wie Mercaptoethanol, 2-Ethylhexylthioglykolat, Thioglykolsäure und Dodecylmercaptan. Wenn Polymerisationsregler verwendet werden, beträgt ihre Einsatzmenge in der Regel 0,1 bis 15 Gew.-%, bevorzugt 0,1 bis 5 Gew.-% und besonders bevorzugt 0,1 bis 2,5 Gew.-%, bezogen auf Vinylamid I.

Die Polymerisationstemperatur liegt in der Regel bei 30 bis 200°C, bevorzugt bei 50 bis 150°C und besonders bevorzugt bei 75 bis 110°C .

Die Polymerisation wird üblicherweise unter atmosphärischem Druck durchgeführt, kann jedoch auch unter vermindertem oder erhöhtem Druck, z.B. bei 1 oder 5 bar, ablaufen.

Die erfindungsgemäßen Pfropfpolymerisate eignen sich hervorragend als Farbstoffübertragungsinhibitoren beim Waschen von farbigen Textilien. Sie verhindern nicht nur die Farbstoffübertragung wirkungsvoll, sondern sind auch universell in den verschiedensten Waschmitteln einsetzbar und einformulierbar und mit den üblichen Waschmittelkomponenten verträglich.

Die erfindungsgemäßen Pfropfpolymerisate werden in der Regel in Mengen von 0,05 bis 5 Gew.-%, vorzugsweise 0,1 bis 2 Gew.-%, in Waschmittelformulierungen eingesetzt. Sie sind sowohl für Vollwaschmittel als auch für Spezialwaschmittel, wie Colorwaschmittel, geeignet. In farbschonenden Colorwaschmitteln kommen sie üblicherweise in Mengen von 0,1 bis 1,5 Gew.-%, bevorzugt 0,2 bis 1 Gew.-%, zum Einsatz.

Die Waschmittel können dabei pulverförmig sein oder in flüssiger Einstellung vorliegen. Sie enthalten die üblicherweise verwendeten anionischen und/oder nichtionischen Tenside in Mengen von 2 bis 50 Gew.-%, vorzugsweise 8 bis 30 Gew.-%. Besonders bevorzugt werden phosphatfreie oder phosphatreduzierte Waschmittel hergestellt, die einen Phosphatgehalt von höchstens 25 Gew.-%, berechnet als Pentanatriumtriphosphat, enthalten. Die Waschmittel können auch in Granulatform oder als sogenannte Kompaktwaschmittel vorliegen, die eine Dichte von 500 bis 950 g/l haben.

Geeignete anionische Tenside sind beispielsweise C₈-C₂₂-, vorzugsweise C₁₀-C₁₈-Fettalkoholsulfate, z.B. C₉/C₁₁-Alkoholsulfat, C₁₂/C₁₃-Alkoholsulfate, Cetylsulfat, Myristylsulfat, Palmitylsulfat, Stearylsulfat und Talgfettalkoholsulfat.

Weitere geeignete anionische Tenside sind sulfatierte alkoxylierte C₈-C₂₂-, vorzugsweise C₁₀-C₁₈-Alkohole bzw. deren lösliche Salze. Verbindungen dieser Art werden beispielsweise dadurch hergestellt, daß man zunächst den Alkohol alkoxyliert und das Alkoxylierungsprodukt anschließend sulfatiert. Für die Alkoxylierung verwendet man bevorzugt Ethylenoxid, wobei man pro mol Fettalkohol 2 bis 50 mol, insbesondere 3 bis 20 mol, Ethylenoxid einsetzt. Die Alkoxylierung kann jedoch auch mit Propylenoxid oder mit Butylenoxid durchgeführt werden. Selbstverständlich können die Alkylenoxide auch in Kombination zum Einsatz kommen. Die alkoxylierten Alkohole können die Ethylenoxid-, Propylenoxid- und/oder Butylenoxideinheiten dann in Form von Blöcken oder in statistischer Verteilung enthalten.

Außerdem als anionische Tenside geeignet sind Alkylsulfonate, insbesondere C₈-C₂₄- und vor allem C₁₀-C₁₈-Alkylsulfonate, sowie Seifen, z.B. die Salze von aliphatischen C₈-C₂₄-Carbonsäuren.

Weitere geeignete anionische Tenside sind C₉-C₂₀-linear-Alkylbenzolsulfonate (LAS). Ihre Einsatzmenge kann im allgemeinen bis zu 8 Gew.-% betragen.

Die anionischen Tenside werden dem Waschmittel vorzugsweise in Form von Salzen zugegeben. Geeignete Kationen sind Alkalimetallionen, wie Natrium-, Kalium- und Lithiumionen, und Ammoniumionen, z.B. Hydroxyethylammonium-, Di(hydroxyethyl)ammonium- und Tri(hydroxyethyl)ammoniumionen.

Als nichtionische Tenside eignen sich beispielsweise alkoxylierte C₈-C₂₂-, insbesondere C₁₀-C₁₈-Alkohole. Die Alkoxylierung kann mit Ethylenoxid, Propylenoxid und/oder Butylenoxid durchgeführt werden. Die alkoxylierten Alkohole können die Alkylenoxideinheiten dann in Form von Blöcken oder in statistischer Verteilung enthalten. Pro mol Alkohol verwendet man 2 bis 5, vorzugsweise 3 bis 20 mol, mindestens eines dieser Alkylenoxide. Bevorzugt setzt man als Alkylenoxid Ethylenoxid ein.

Weitere geeignete nichtionische Tenside sind C₈-C₂₂-, insbesondere C₁₀-C₁₈-Alkylpolyglucoside. Diese Verbindungen enthalten 1 bis 20, vorzugsweise 1,1 bis 5 Glucosideinheiten.

Eine weitere Klasse geeigneter nichtionischer Tenside sind N-Al-kylglucamide der Strukturen 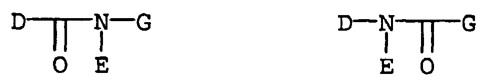 bei denen D C₆-C₂₂-Alkyl, bevorzugt C₁₀-C₁₈-Alkyl, E Wasserstoff oder C₁-C₄-Alkyl, bevorzugt Methyl, und G Polyhydroxy-C₅-C₁₂-alkyl mit mindestens 3 Hydroxylgruppen, bevorzugt Polyhydroxy-C₅-C₆-alkyl, bedeuten. Beispielsweise erhält man derartige Verbindungen durch Acylierung von reduzierend aminierten Zuckern mit Säurechloriden von C₁₀-C₁₈-Carbonsäuren.

Vorzugsweise enthalten die Waschmittelformulierungen mit 3 bis 12 mol Ethylenoxid ethoxylierte C₁₀-C₁₆-Alkohole, insbesondere ethoxylierte Fettalkohole, als nichtionische Tenside.

Die pulverförmigen und granulatförmigen Waschmittel sowie gegebenenfalls auch strukturierte Flüssigwaschmittel enthalten außerdem einen oder mehrere anorganische Builder.

Als anorganische Builder eignen sich dabei alle üblichen Verbindungen, wie Alumosilikate, Silikate, Carbonate und Phosphate.

Als Beispiele seien im einzelnen Alumosilikate mit ionenaustauschenden Eigenschaften, wie Zeolithe, z.B. Zeolith A, X, B, P, MAP und HS in ihrer Na-Form und in Formen, in denen Na teilweise gegen andere Kationen, wie Li, K, Ca, Mg oder Ammonium ausgetauscht ist, genannt.

Bei den Silikaten eignen sich z.B. amorphe und kristalline Silikate, wie amorphe Disilikate, kristalline Disilikate, z.B. das Schichtsilikat SKS-6 (Clariant AG). Die Silikate können in Form ihrer Alkali-, Erdalkali- oder Ammoniumsalze eingesetzt werden. Vorzugsweise werden Na-, Li- und Mg-Silikate verwendet.

Als anorganische Builder geeignete Carbonate und Hydrogencarbonate können ebenfalls in Form ihrer Alkali-, Erdalkali- und Ammoniumsalze zum Einsatz kommen. Bevorzugt sind Na-, Li- und Mg-Carbonate und -Hydrogencarbonate, besonders bevorzugt sind Natriumcarbonat und/oder Natriumhydrogencarbonat. Als geeignetes Phosphat sei insbesondere Natriumtriphosphat genannt.

Die anorganischen Builder können in den Waschmitteln in Mengen von 5 bis 60 Gew.-% enthalten sein. Sie können allein oder in beliebigen Kombinationen miteinander in das Waschmittel eingearbeitet werden. In pulver- und granulatförmigen Waschmitteln werden sie in Mengen von 10 bis 60 Gew.-%, vorzugsweise 20 bis 50 Gew.-%, zugesetzt. In strukturierten (mehrphasigen) Flüssigwaschmitteln werden anorganische Builder in Mengen bis zu 40 Gew.-%, vorzugsweise bis zu 20 Gew.-%, eingesetzt. Sie werden dabei in den flüssigen Formulierungsbestandteilen suspendiert.

Die Waschmittel enthalten zusätzlich zu den anorganischen Buildern eine oder mehrere niedrigmolekulare Polycarboxylate als organische Cobuilder.

Geeignete Polycarboxylate sind beispielsweise:
(1) Polymaleinsäuren, die durch Polymerisation von Maleinsäureanhydrid in aromatischen Kohlenwasserstoffen in Gegenwart von Radikale bildenden Initiatoren und anschließende Hydrolyse der Anhydridgruppen des Polymerisats erhältlich sind. Die mittleren Molekulargewichte M_{w} dieser Polymaleinsäuren betragen vorzugsweise 800 bis 5 000.
(2) Copolymerisate ungesättigter C₄-C₈-Dicarbonsäuren, wie Maleinsäure, Fumarsäure, Itaconsäure und Citraconsäure, bevorzugt Maleinsäure, wobei als Comonomere
   (i) monoethylenisch ungesättigte C₃-C₈-Monocarbonsäuren, wie Acrylsäure, Methacrylsäure, Crotonsäure und Vinylessigsäure, bevorzugt Acrylsäure und Methacrylsäure,
   (ii) C₂-C₂₂-Monoolefine, Vinyl-C₁-C₈-alkylether, Styrol, Vinylester von C₁-C₈-Carbonsäuren, (Meth)Acrylamid und Vinylpyrrolidon, bevorzugt C₂-C₆-α-Olefine, Vinyl-C₁-C₄-alkylether, Vinylacetat und Vinylpropionat, Hydroxyalkylacrylate, wie Hydroxyethylacrylat, Hydroxy-n-propylacrylat, Hydroxy-n-butylacrylat, Hydroxyisobutylacrylat, Hydroxyethylmethacrylat, Hydroxypropylmethacrylat und Hydroxyisopropylacrylat,
   (iii) (Meth)Acrylester von einwertigen C₁-C₈-Alkoholen, (Meth)Acrylnitril, (Meth)Acrylamide von C₁-C₈-Alkylaminen, N-Vinylformamid und N-Vinylimidazol
   in Betracht kommen. Die Copolymerisate können die Monomere der Gruppe
   (i) in Mengen bis zu 95 Gew.-%,
   (ii) in Mengen bis zu 60 Gew.-% und
   (iii) in Mengen bis zu 20 Gew.-%
   einpolymerisiert enthalten. Die Copolymerisate können Einheiten von 2, 3, 4 oder gegebenenfalls auch 5 verschiedenen Monomeren enthalten.
   Falls die Copolymerisate der Gruppe (ii) Vinylester- oder Vinylformamideinheiten einpolymerisiert enthalten, können diese auch teilweise oder vollständig zu Vinylalkohol- bzw. Vinylamineinheiten hydrolysiert vorliegen.
   Als Copolymerisate von Dicarbonsäuren eignen sich vorzugsweise:
   - Copolymerisate aus Maleinsäure und Acrylsäure im Gewichtsverhältnis 10:90 bis 95:5, besonders bevorzugt 30:70 bis 90:10, mit mittleren Molekulargewichten M_{w} insbesondere bis zu 10 000, vor allem 1 000 bis 6 000,
   - Terpolymere aus Maleinsäure, Acrylsäure und einem Vinylester einer C₁-C₃-Carbonsäure im Gewichtsverhältnis 10 (Maleinsäure) : 90 (Acrylsäure + Vinylester) bis 95:10, wobei das Gewichtsverhältnis von Acrylsäure zu Vinylester von 20:80 bis 80:20 betragen kann,
   - insbesondere Terpolymere aus Maleinsäure, Acrylsäure und Vinylformiat, Vinylacetat oder Vinylproprionat im Gewichtsverhältnis 20 (Maleinsäure) : 80 (Acrylsäure + Vinylester) bis 90:10, wobei das Gewichtsverhältnis von Acrylsäure zu Vinylester von 30:70 bis 70:30 betragen kann, mit mittleren Molekulargewichten M_{w} insbesondere bis zu 10 000, vor allem 1 000 bis 7 000,
   - Copolymerisate von Maleinsäure mit C₂-C₈-α-Olefinen, bevorzugt Ethylen, Propylen, Isobuten und Diisobuten, im Molverhältnis 40:60 bis 80:20, bevorzugt 50:50, mit mittleren Molekulargewichten M_{w} insbesondere von 1 000 bis 7 000.
(3) Pfropfpolymerisate ungesättigter Carbonsäuren auf niedrigmolekulare Kohlenhydrate bzw. hydrierte Kohlenhydrate.
   Geeignete ungesättigte Carbonsäuren sind beispielsweise Maleinsäure, Fumarsäure, Itaconsäure, Citraconsäure, Acrylsäure, Methacrylsäure, Crotonsäure und Vinylessigsäure sowie Mischungen aus Acrylsäure und Maleinsäure, die z.B. in Mengen von 40 bis 95 Gew.-%, bezogen auf die zu pfropfende Komponente, aufgepfropft werden. Zur Modifizierung können zusätzlich bis zu 30 Gew.-%, bezogen auf die zu pfropfende Komponente, weitere monoethylenisch ungesättigte Monomere einpolymerisiert vorliegen. Geeignete modifizierende Monomere sind die oben genannten Monomere der Gruppen (ii) und (iii) sowie Acrylamido-2-methylpropansulfonsäure und Natriumvinylsulfonat.
   Als Pfropfgrundlage sind abgebaute Polysaccharide, z.B. saure oder enzymatisch abgebaute Stärken, Inuline oder Zellulose, reduzierte (hydrierte oder hydrierend aminierte) abgebaute Polysaccharide, z.B. Mannit, Sorbit, Aminosorbit und Glucamin, Zucker, z.B. Glucose, sowie Polyalkylenglykole mit mittleren Molekulargewichten M_{w} bis zu 5 000, z.B. Polyethylenglykole, Ethylenoxid/Propylenoxid-Blockcopolymere, Ethylenoxid/Butylenoxid-Blockcopolymere, statistische Ethylenoxid/Propylenoxid-Copolymerisate und statistische Ethylenoxid/Butylenoxid-Copolymerisate, und alkoxylierte ein- und mehrwertige C₁-C₂₂-Alkohole geeignet.
   Bevorzugt werden aus dieser Gruppe gepfropfte abgebaute bzw. abgebaute reduzierte Stärken und gepfropfte Polyethylenoxide eingesetzt, wobei 20 bis 80 Gew.-% Monomere, bezogen auf die Pfropfkomponente, bei der Pfropfpolymerisation zum Einsatz kommen. Zur Pfropfung wird vorzugsweise eine Mischung von Maleinsäure und Acrylsäure im Verhältnis von 90:10 bis 10:90 verwendet. Die mittleren Molekulargewichte M_{w} dieser Pfropfpolymerisate betragen vorzugsweise bis zu 10 000 und insbesondere 1 000 bis 7 000.
(4) Polyglyoxylsäuren mit unterschiedlich strukturierten Endgruppen und mittleren Molekulargewichten M_{w} von bis zu 10 000, insbesondere von 1 000 bis 7 000.
(5) Polyamidocarbonsäuren und modifizierte Polyamidocarbonsäuren.
   Vorzugsweise verwendet man Polyasparaginsäuren und Cokondensate der Asparaginsäure mit weiteren Aminosäuren, C₄-C₂₅-Mono-und -Dicarbonsäuren oder C₄-C₂₅-Mono- und -Diaminen. Besonders bevorzugt werden in phosphorhaltigen Säuren hergestellte mit C₆-C₂₂-Mono- oder -Dicarbonsäuren oder C₆-C₂₂-Mono- oder -Diaminen modifizierte Polyasparaginsäuren eingesetzt. Ganz besonders bevorzugt sind solche modifizierten Polyasparaginsäuren, die durch Kondensation von Asparaginsäure mit 5 bis 25 mol-%, bezogen auf Asparaginsäure, Tridecylamin oder Oleylamin und mindestens 5 Gew.-%, bezogen auf Asparaginsäure, Phosphorsäure oder phosphoriger Säure bei Temperaturen von 150 bis 230°C und Hydrolyse und Neutralisation der Cokondensate erhältlich sind. Die mittleren Molekulargewichte M_{w} dieser Polykondensate betragen vorzugsweise bis zu 10 000 und insbesondere 1 000 bis 7 000.
(6) Kondensationsprodukte der Zitronensäure mit Hydroxycarbonsäuren oder Polyhydroxyverbindungen mit mittleren Molekulargewichten M_{w} bis zu 10 000, vorzugsweise bis zu 5 000.

Die organischen Cobuilder sind in den pulver- und granulatförmigen sowie in den strukturierten flüssigen Waschmittelformulierungen in Mengen von 0,5 bis 15 Gew.-%, vorzugsweise 1 bis 8 Gew.-%, enthalten. In flüssigen Waschmittelformulierungen sind sie in Mengen von 0,5 bis 20 Gew.-%, bevorzugt 1 bis 10 Gew.-%, besonders bevorzugt 1,5 bis 7,5 Gew.-%, enthalten.

Die pulver- und granulatförmigen Vollwaschmittel enthalten außerdem ein Bleichsystem, bestehend aus mindestens einem Bleichmittel, gegebenenfalls in Kombination mit einem Bleichaktivator und/oder einem Bleichkatalysator.

Geeignete Bleichmittel sind Perborate und Percarbonate in Form ihrer Alkalimetallsalze, insbesondere ihrer Na-Salze. Sie sind in Mengen von 5 bis 30 Gew.-%, vorzugsweise 10 bis 25 Gew.-%, in den Formulierungen enthalten.

Weitere geeignete Bleichmittel sind anorganische und organische Persäuren in Form ihrer Alkalimetall- oder Magnesiumsalze oder teilweise auch in Form der freien Säuren. Beispiele für geeignete organische Percarbonsäuren und deren Salze sind Mg-Monoperphthalat, Phthalimidopercapronsäure und Dodecan-1,10-dipersäure. Beispiel für ein anorganisches Persäuresalz ist K-Peroxomonosulfat (Oxon).

Geeignete Bleichaktivatoren sind z.B.:
- Acylamine, wie Tetraacetylethylendiamin, Tetraacetylglycoluril, N,N'-Diacetyl-N,N'-dimethylharnstoff und 1,5-Diacetyl-2,4-dioxohexahydro-1,3,5-triazin,
- acylierte Lactame, wie Acetylcaprolactam, Octanoylcaprolactam und Benzoylcaprolactam,
- substituierte Phenolester von Carbonsäuren, wie Na-Acetoxybenzolsulfonat, Na-Octanoyloxybenzolsulfonat und Na-Nonanoyloxybenzolsulfonat,
- acylierte Zucker, wie Pentaacetylglucose,
- Anthranilderivate, wie 2-Methylanthranil und 2-Phenylanthranil,
- Enolester, wie Isopropenylacetat,
- Oximester, wie O-Acetylacetonoxim,
- Carbonsäureanhydride, wie Phthalsäureanhydrid und Essigsäureanhydrid.

Vorzugsweise werden Tetraacetylethylendiamin und Na-Nonanoyloxybenzolsulfonate als Bleichaktivatoren eingesetzt.

Die Bleichaktivatoren sind in Vollwaschmitteln in Mengen von 0,1 bis 15 Gew.-%, vorzugsweise in Mengen von 1 bis 8 Gew.-%, besonders bevorzugt in Mengen von 1,5 bis 6 Gew.-% enthalten.

Geeignete Bleichkatalysatoren sind quaternisierte Imine und Sulfonimine und Mn-Komplexe. Falls Bleichkatalysatoren in den Waschmittelformulierungen eingesetzt werden, sind sie in Mengen von bis zu 1,5 Gew.-%, vorzugsweise bis zu 0,5 Gew.-%, im Fall der sehr aktiven Mn-Komplexe in Mengen bis zu 0,1 Gew.-% enthalten.

Die Waschmittel enthalten vorzugsweise ein Enzymsystem. Dabei handelt es sich üblicherweise um Proteasen, Lipasen, Amylasen oder Cellulasen. Das Enzymsystem kann auf ein einzelnes Enzym beschränkt sein oder eine Kombination verschiedener Enzyme beinhalten. Von den handelsüblichen Enzymen werden den Waschmitteln in der Regel Mengen von 0,1 bis 1,5 Gew.-%, vorzugsweise 0,2 bis 1 Gew.-%, des konfektionierten Enzyms zugesetzt. Geeignete Proteasen sind z.B. Savinase und Esperase (Hersteller Novo Nordisk), eine geeignete Lipase ist z.B. Lipolase (Hersteller Novo Nordisk), eine geeignete Cellulase ist z.B. Celluzym (Hersteller ebenfalls Novo Nordisk).

Die Waschmittel enthalten vorzugsweise außerdem Soil-Release-Polymere und/oder Vergrauungsinhibitoren. Dabei handelt es sich z.B. um Polyester aus einseitig mit zwei- und/oder mehrwertigen Alkoholen, insbesondere Ethylenglykol und/oder Propylenglykol, verschlossenen Polyethylenoxiden (Alkoholkomponente) und aromatischen Dicarbonsäuren oder aromatischen und aliphatischen Dicarbonsäuren (Säurekomponente).

Weitere geeignete Soil-Release-Polymere sind amphiphile Pfropf-und Copolymerisate von Vinyl- und/oder Acrylestern auf bzw. mit Polyalkylenoxiden und modifizierte Cellulosen, z.B. Methylcellulose, Hydroxypropylcellulose und Carboxymethylcellulose.

Bevorzugt eingesetzte Soil-Release-Polymere sind Pfropfpolymerisate von Vinylacetat auf Polyethylenoxid des mittleren Molekulargewichts M_{w} 2 500 bis 8 000 im Gewichtsverhältnis 1,2:1 bis 3:1, sowie handelsübliche Polyethylenterephthalat/Polyoxyethylenterephthalate des mittleren Molekulargewichts M_{w} 3 000 bis 25 000 aus Polyethylenoxiden des mittleren Molekulargewichts M_{w} 750 bis 5 000 mit Terephthalsäure und Ethylenoxid und einem Molverhältnis von Polyethylenterephthalat zu Polyoxyethylenterephthalat von 8:1 bis 1:1 und Blockpolykondensate, die Blöcke aus (a) Ester-Einheiten aus Polyalkylenglykolen eines mittleren Molekulargewichts M_{w} von 500 bis 7 500 und aliphatischen Dicarbonsäuren und/oder Monohydroxymonocarbonsäuren und (b) Ester-Einheiten aus aromatischen Dicarbonsäuren und mehrwertigen Alkoholen enthalten. Diese amphiphilen Blockpolymerisate haben mittlere Molekulargewichte M_{w} von 1 500 bis 25 000.

Vergrauungsinhibitoren und Soil-Release-Polymere sind in den Waschmittelformulierungen in Mengen von 0 bis 2,5 Gew.-%, bevorzugt 0,2 bis 1,5 Gew.-%, besonders bevorzugt 0,3 bis 1,2 Gew.-%, enthalten.

### Beispiele

### I) Herstellung erfindungsgemäßer Pfropfpolymerisate

Die in den Beispielen angegebenen K-Werte wurden nach H. Fikentscher, Cellulose-Chemie, Bd. 13, S. 58 bis 64 und 71 bis 74 (1932) bei 25°C in 1 gew.-%iger wäßriger Lösung bestimmt.

### Beispiel 1

In einem Reaktor mit Stickstoffzuführung, Rückflußkühler, Rühr-und Dosiervorrichtung wurden 120 g Polyethylenglykol mit einem mittleren Molekulargewicht Mₙ von 9 000 und 120 g Wasser unter Stickstoffzufuhr auf ca. 80°C Innentemperatur erhitzt. Dann wurde mit der Zugabe einer Mischung von 280 g Vinylpyrrolidon und 2,8 g Mercaptoethanol begonnen. Dabei wurden zunächst 5 Gew.-% dieser Mischung auf einmal und der Rest nach 15 min kontinuierlich in 6 h zugegeben. Gleichzeitig mit der ersten Zugabe dieser Mischung wurde mit der kontinuierlichen 7stündigen Zugabe von 3,5 g tert.-Butylperpivalat in 60 g Isopropanol begonnen. Nach Beendigung dieses Zulaufs und Zugabe von 100 g Wasser wurde weitere 2 h bei 80°C gerührt. Anschließend wurden weitere 1,4 g tert.-Butylperpivalat in 8 g Isopropanol zugegeben und weitere 2 h bei 80°C gerührt. Der letzte Schritt wurde noch 2 mal wiederholt. Anschließend wurde auf 100°C erhitzt und eine Wasserdampfdestillation (1 h) durchgeführt. Es wurde eine Lösung mit einem K-Wert von 27,2 und einem Feststoffgehalt von 47,7 Gew.-% erhalten.

### Beispiel 2

Es wurde analog Beispiel- 1 vorgegangen, jedoch wurden 80 g des Polyethylenglykols und 80 g Wasser, eine Mischung von 320. g Vinylpyrrolidon und 3,2 g Mercaptoethanol sowie 4 g tert.-Butylperpivalat in 60 g Isopropanol und weitere 1,6 g tert.-Butylperpivalat in 8 g Isopropanol (2 mal wiederholt) eingesetzt. Nach Zugabe von 100 g Wasser wurde eine Lösung mit einem K-Wert von 25 und einem Feststoffgehalt von 49 Gew.-% erhalten.

### II) Prüfung erfindungsgemäßer Pfropfpolymerisate als Farbübertragungsinhibitoren in Waschmitteln

Die erfindungsgemäßen Pfropfpolymerisate wurden als Farbübertragungsinhibitoren in Waschmitteln geprüft. Dafür wurden beispielhaft ein granuläres Waschmittel (WM 1) und ein Flüssigwaschmittel (WM 2) der in Tabelle 1 aufgeführten Zusammensetzung hergestellt, die jeweils 0,15 Gew.-% Pfropfpolymerisat enthielten. Dann wurde weißes Baumwoll-Prüfgewebe unter den in Tabelle 2 genannten Waschbedingungen in Gegenwart von Farbstoff, der der Waschflotte als 0,03 bzw. 0,06 gew.-%ige wässrige Lösung zugesetzt wurde, gewaschen.

Die Messung der Anfärbung des Prüfgewebes erfolgte photometrisch mit dem Photometer Elrepho 2000 (Datacolor). Die Remission (in %) wurde bei der Wellenlänge der jeweiligen maximalen Absorption der verschiedenen Farbstoffe gemessen. Der Weißgrad des Testgewebes nach der Wäsche diente zur Beurteilung der Anfärbung. Die in Tabelle 3a und 3b angegebenen Messwerte wurden durch mehrfache Wiederholung und Mittelwertbildung gesichert.

In Tabelle 3a und 3b sind auch die Ergebnisse der zum Vergleich ohne Farbstoffübertragungsinhibitor (V1) bzw. mit einem analog Beispiel 1 der DE-A-100 36 713 unter Verwendung eines Polyethylenglykols mit einem mittleren Molekulargewicht Mₙ von 9 000 hergestellten Pfropfpolymerisat als Farbstoffübertragungsinhibitor (V2) durchgeführten Waschversuche aufgeführt.

**Tabelle 1: Zusammensetzung der Waschmittel (WM)**

| Inhaltsstoffe | WM1 | WM 2 |
|---|---|---|
| | Menge in Gew.-% | Menge in Gew.-% |
| C₁₂/C₁₄-Fettalkoholsulfat | | 27 |
| C₁₂/C₁₄-Fettalkoholethoxylat | | 7 |
| Zitronensäure | | 2 |
| C₁₂/C₁₄-Alkylbenzolsulfonat | 9 | |
| C₁₃/C₁₅-Talgfettalkohol, umgesetzt mit 7 EO | 6,6 | 6 |
| Kokosfettsäure | | 5 |
| KOH | | |
| Borax | | 2,2 |
| Propylenglykolmonomethylether | | 10 |
| Ethanol | | |
| Seife | 1,8 | 1,4 |
| Zeolith A | 45 | |
| Polycarboxylat (Acrylsäure/Maleinsäure-Copolymerisat (w/w 70:30, M_{w} 70 000) | 5 | |
| Magnesiumsilikat | 0,8 | |
| Natriumcarbonat | 7,0 | |
| Trinatriumcitrat x 2 H₂O | 12 | |
| Carboxymethylcellulose, Na-Salz | 0,8 | |
| Pfropfpolymerisat (ber. 100%) | 0,15 | 0,15 |
| Wasser | ad 100 | ad 100 |

**Tabelle 2: Waschbedingungen**

| | WM 1 | WM 2 |
|---|---|---|
| Gerät | Launder-O-meter | Launder-O-meter |
| Zyklen | 1 | 1 |
| Dauer | 30 min | 30 min |
| Wasserhärte | 3,0 mmol Ca²⁺/l, Molverhältnis Ca:Mg:HCO₃: 4:1:8 | 3,0 mmol Ca²⁺/l, Molverhältnis Ca:Mg:HCO₃: 4:1:8 |
| Temperatur | 60°C | 60°C |
| Farbstoffeintrag | Farbstofflösung | Farbstofflösung |
| Prüfgewebe | Baumwolläppchen | Baumwolläppchen |
| Flottenmenge | 250 ml | 250 ml |
| Flottenverhältnis | 1:12,5 | 1:12,5 |
| Waschmittelkonzentration | 4,5 g/l | 6 g/l |

**Tabelle 3a: Waschergebnisse WM 1**

| Pfropfpolymerisat aus Bsp. | % Remission Direktblau 71 | % Remission Direktrot 212 |
|---|---|---|
| 1 | 61,9 | 56,3 |
| 2 | 62,2 | 57,1 |
| V1 (kein Zusatz) | 56,1 | 53,6 |
| V2 | 58,5 | 54,8 |
| Weißgrad vor der Wäsche | 79,8 | 78,8 |

**Tabelle 3b: Waschergebnisse WM 2**

| Pfropfpolymerisat aus Bsp. | % Remission Direktblau 71 | % Remission Direktrot 212 | % Remission Direktschwarz 22 |
|---|---|---|---|
| 1 | 64,7 | 56,0 | 68,4 |
| 2 | 62,9 | 56,1 | 68,9 |
| V1 (kein Zusatz) | 57,0 | 54,2 | 68,0 |
| V2 | 58,4 | 54,2 | 67,1 |
| Weißgrad vor der Wäsche | 79,8 | 78,8 | 80,0 |

Die erhaltenen Waschergebnisse belegen die sehr gute Wirksamkeit der erfindungsgemäßen Pfropfpolymerisate als Farbübertragungsinhibitoren.

## Patentansprüche

1. Pfropfpolymerisate aus
(A) einer polymeren Pfropfgrundlage, die keine monoethylenisch ungesättigten Einheiten aufweist, und
(B) durch Polymerisation eines cyclischen N-Vinylamids der allgemeinen Formel I 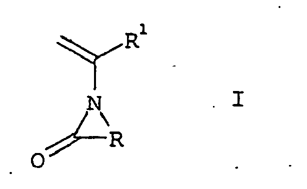 in der R C₁-C₅-Alkyl und R¹ Wasserstoff oder C₁-C₄-Alkyl bedeuten, gebildeten polymeren Seitenketten,
wobei der Anteil der Seitenketten (B) am Gesamtpolymerisat ≥ 60 Gew.-% beträgt.

2. Pfropfpolymerisate nach Anspruch 1, bei denen die Seitenketten (B) aus polymerisiertem N-Vinylpyrrolidon gebildet sind.

3. Pfropfpolymerisate nach Anspruch 1 oder 2, die als Pfropfgrundlage (A) einen Polyether eines mittleren Molekulargäwichts Mₙ von mindestens 300 der allgemeinen Formel IIa oder IIb 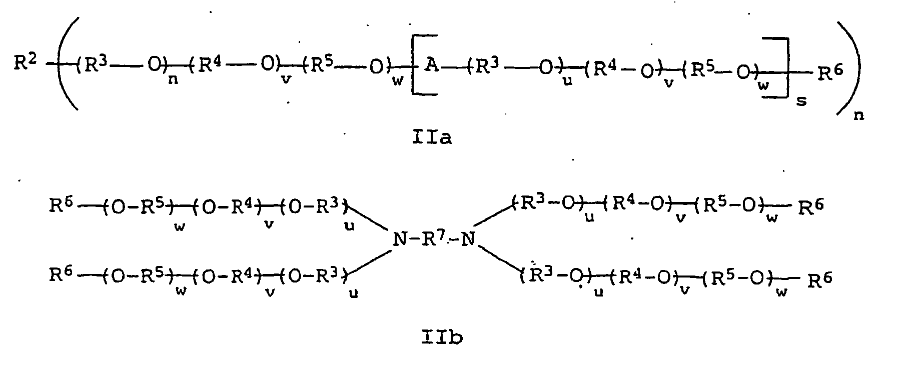 in denen die Variablen unabhängig voneinander folgende Bedeutung haben:
R² Hydroxy, Amino, C₁-C₂₄-Alkoxy, R⁸-COO-, R⁸-NH-COO-, Polyalkoholrest;
R³ bis R⁵ gleich oder verschieden und jeweils -(CH₂)₂-, -(CH₂)₃-, -(CH₂)₄-, -CH₂-CH(CH₃)-, -CH₂-CH(CH₂-CH₃)-, -CH₂-CHOR⁹-CH₂-;
R⁶ Wasserstoff, Amino-C₁-C₆-alkyl, C₁-C₂₄-Alkyl, R⁸-CO-, R⁸-NH-CO-;
R⁷ C₁-C₂₀-Alkylen, dessen Kohlenstoffkette durch 1 bis 10 Sauerstoffatome in Etherfunktion unterbrochen sein kann;
R⁸ C₁-C₂₄-Alkyl;
R⁹ Wasserstoff, C₁-C₂₄-Alkyl, R⁸-CO-;
A -CO-O-, -CO-B-CO-O-, -CO-NH-B-NH-CO-O-;
B -(CH₂)ₜ-, gewünschtenfalls substituiertes Arylen;
n 1 oder, wenn R² einen Polyalkoholrest bedeutet, 1 bis 8;
s 0 bis 500;
t 1 bis 12;
u gleich oder verschieden und jeweils 1 bis 5000;
v gleich oder verschieden und jeweils 0 bis 5000;
w gleich oder verschieden und jeweils 0 bis 5000,
enthalten.

4. Pfropfpolymerisate nach den Ansprüchen 1 bis 3, die als Pfropfgrundlage (A) Polyalkylenoxide, einseitig endgruppenverschlossene Polyalkylenoxide und/oder beidseitig endgruppenverschlossene Polyalkylenoxide enthalten.

5. Verfahren zur Herstellung von Pfropfpolymerisaten gemäß den Ansprüchen 1 bis 4, **dadurch gekennzeichnet, daß** man das cyclische N-Vinylamid der Formel I in Gegenwart der Pfropfgrundlage (A) radikalisch polymerisiert.

6. Verwendung von Pfropfpolymerisaten gemäß den Ansprüchen 1 bis 4 als Farbübertragungsinhibitoren in Waschmitteln.

## Claims

1. A graft polymer consisting of
(A) a polymeric grafting base devoid of monoethylenically unsaturated units, and
(B) polymeric side chains formed by polymerization of a cyclic N-vinylamide of the general formula I 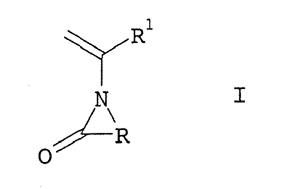
where R is C₁-C₅-alkyl and R¹ is hydrogen or C₁-C₄-alkyl,
wherein said side chains (B) account for ≥ 60% by weight of the total polymer.

2. The graft polymer according to claim 1 wherein said side chains (B) are formed of polymerized N-vinylpyrrolidone.

3. The graft polymer according to claim 1 or 2 wherein said grafting base (A) is a polyether having an average molecular weight Mₙ of at least 300 and the general formula IIa or IIb 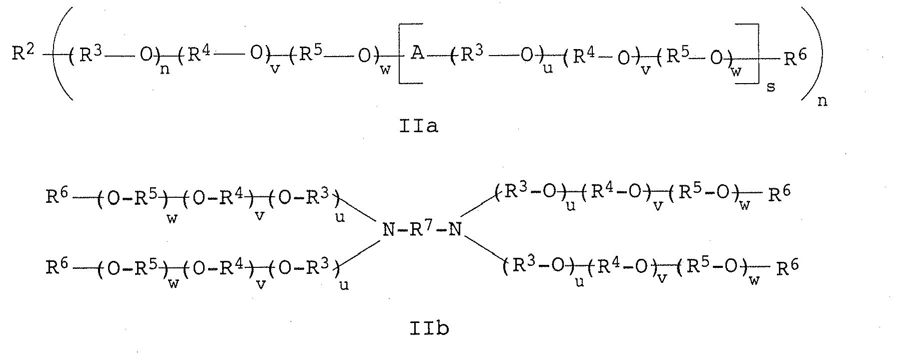 where independently
R² is hydroxyl, amino, C₁-C₂₄-alkoxy, R⁸-COO-, R⁸-NH-COO- or a polyalcohol radical,
R³, R⁴ and R⁵, which may be the same or different, are each -(CH₂)₂-, -(CH₂)₃-, -(CH₂)₄-, -CH₂-CH(CH₃)-, -CH₂-CH(CH₂-CH₃)- or -CH₂-CHOR⁹-CH₂-,
R⁶ is hydrogen, amino-C₁-C₆-alkyl, C₁-C₂₄-alkyl, R⁸-CO- or R⁸-NH-CO-,
R⁷ is C₁-C₂₀-alkylene whose carbon chain may be interrupted by from 1 to 10 oxygen atoms in ether function,
R⁸ is C₁-C₂₄-alkyl,
R⁹ is hydrogen, C₁-C₂₄-alkyl or R⁸-CO-,
A is -CO-O-, -CO-B-CO-O- or -CO-NH-B-NH-CO-O-,
B is -(CH₂)ₜ- or substituted or unsubstituted arylene,
n is 1 or, when R² is a polyalcohol radical, is from 1 to 8,
s is from 0 to 500,
t is from 1 to 12,
each u, which may be the same or different, is from 1 to 5 000,
each v, which may be the same or different, is from 0 to 5 000, and
each w, which may be the same or different, is from 0 to 5 000.

4. The graft polymer according to any of claims 1 to 3 wherein said grafting base (A) is selected from polyalkylene oxides, singly tipped polyalkylene oxides and/or doubly tipped polyalkylene oxides.

5. A process for preparing a graft polymer according to any of claims 1 to 4, which comprises free-radically polymerizing said cyclic N-vinylamide of the formula I in the presence of said grafting base (A).

6. The use of a graft polymer according to any of claims 1 to 4 as dye transfer inhibitors in laundry detergents.

## Revendications

1. Polymères greffés à base
(A) d'une base de greffage polymère qui ne présente pas d'unités monoéthyléniquement insaturées, et
(B) de chaînes latérales polymères formées par polymérisation d'un N-vinylamide cyclique de la formule générale I : 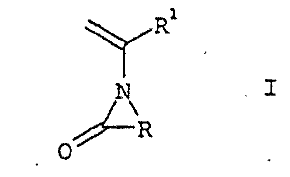 dans laquelle R représente un groupe alkyle en C₁-C₅ et R¹ un hydrogène ou un groupe alkyle en C₁-C₄,
la proportion des chaînes latérales (B) sur le polymère entier étant ≥ 60 % en poids.

2. Polymères greffés suivant la revendication 1, dans lesquels les chaînes latérales (B) sont formées à base de N-vinylpyrrolidone polymérisée.

3. Polymères greffés suivant la revendication 1 ou 2, qui contiennent, comme base de greffage (A), un polyéther d'un poids moléculaire moyen Mₙ d'au moins 300 de la formule générale IIa ou IIb : 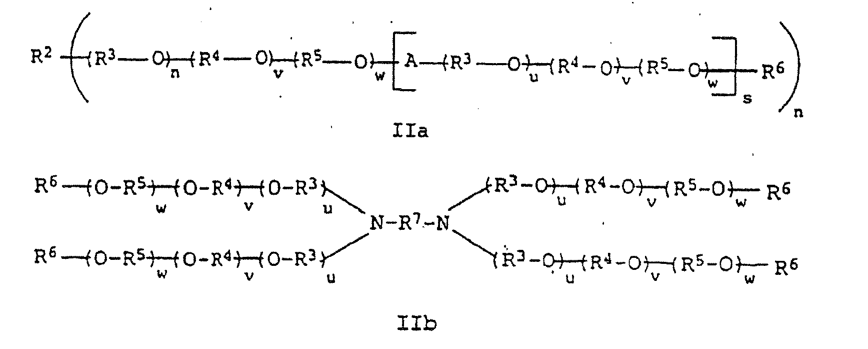 dans lesquelles les variables ont indépendamment l'une de l'autre la signification suivante :
R² représente un radical hydroxy, amino, alcoxy en C₁-C₂₄, R⁸-COO-, R⁸-NH-COO-, polyol,
R³ à R⁵ sont identiques ou différents ou représentent chacun -(CH₂)₂-, -(CH₂)₃-, -(CH₂)₄-, -CH₂-CH(CH₃)-, -CH₂-CH(CH₂-CH₃)-, -CH₂-CHOR⁹-CH₂)-,
R⁶ représente de l'hydrogène ou un groupe aminoalkyle en C₁-C₆, alkyle en C₁-C₂₄, R⁸-CO-, R⁸-NH-CO-,
R⁷ représente un groupe alkylène en C₁-C₂₀, dont la chaîne carbonée peut être interrompue par 1 à 10 atomes d'oxygène en fonction éther,
R⁸ représente un groupe alkyle en C₁-C₂₄,
R⁹ représente de l'hydrogène ou un groupe alkyle en C₁-C₂₄, R⁸-CO-,
A représente -CO-O-, -CO-B-CO-O-, -CO-NH-B-NH-CO-O-,
B représente -(CH₂)ₜ-, éventuellement un arylène substitué,
n vaut 1 ou, lorsque R² représente un radical de polyol, 1 à 8,
s vaut 0 à 500,
t vaut 1 à 12,
u sont identiques ou différents et représentent chacun 1 à 5 000,
v sont identiques ou différents et représentent chacun 0 à 5 000,
w sont identiques ou différents et représentent chacun 0 à 5 000.

4. Polymères greffés suivant les revendications 1 à 3, qui, comme base de greffage (A), contiennent des oxydes de polyalkylène, des oxydes de polyalkylène fermés d'un côté par des groupes terminaux et/ou des oxydes de polyalkylène fermés par des groupes terminaux des deux côtés.

5. Procédé de préparation de polymères greffés suivant les revendications 1 à 4, **caractérisé en ce qu'**on polymérise par voie radicalaire le N-vinylamide cyclique de la formule I en présence de la base de greffage (A).

6. Utilisation de polymères greffés suivant les revendications 1 à 4, comme inhibiteurs de transfert de couleur dans des produits de lavage.
